# FASCICULE DE BREVET EUROPEEN

(11) **EP 2 791 222 B1**
(45) Date de publication et mention de la délivrance du brevet: **11.07.2018**
(21) Numéro de dépôt: 12799126.3
(22) Date de dépôt: 05.12.2012
(51) Int. Cl.: C08J 7/02, C08K 3/16, C08L 77/00

(54) **PROCEDE DE PREPARATION DE GRANULES DE POLYAMIDE ET UTILISATIONS**
VERFAHREN ZUR HERSTELLUNG VON POLYAMIDGRANULAT UND VERWENDUNGEN
PROCESS FOR PREPARING POLYAMIDE GRANULES AND USES

(30) Priorité: 15.12.2011 FR 1161680
(43) Date de publication de la demande: 22.10.2014
(73) Titulaire: Rhodia Operations, 93306 Aubervilliers (FR)
(72) Inventeur: THIEBLEMONT, Virginie, F-69390 Millery (FR)
(74) Mandataire: Chatelan, Florence Anne
(86) Numéro de dépôt international: PCT/EP2012/074408
(87) Numéro de publication internationale: WO 2013/087464

(56) Documents cités:
- DATABASE CA [Online] CHEMICAL ABSTRACTS SERVICE, COLUMBUS, OHIO, US; MUNECHIKA, KAICHI: "Polyamide compositions", XP002676829, extrait de STN Database accession no. 1973:547132 & JP 48 052846 A (TOYOBO CO., LTD.) 25 juillet 1973 (1973-07-25)
- DATABASE WPI Week 199708 Thomson Scientific, London, GB; AN 1997-083530 XP002676830, & JP 8 325382 A (TORAY IND INC) 10 décembre 1996 (1996-12-10)
- DATABASE WPI Week 199441 Thomson Scientific, London, GB; AN 1994-330282 XP002676831, & JP 6 256649 A (TORAY IND INC) 13 septembre 1994 (1994-09-13)
- DATABASE WPI Week 200460 Thomson Scientific, London, GB; AN 2004-618775 XP002676832, & JP 2004 231807 A (TOYOBO KK) 19 août 2004 (2004-08-19) cité dans la demande

## Description

La présente invention a pour objet un procédé de préparation de granulés de polyamide, lui conférant des propriétés de résistance à la chaleur, ainsi que l'utilisation de ces granulés, notamment dans le domaine de la fabrication de fils industriels pour sacs gonflables de sécurité ou pour câbles pour pneumatiques.

Plus précisément, l'invention se rapporte à un procédé de préparation de granulés de polyamide présentant des propriétés de résistance à la chaleur, par imprégnation humide de granulés de polyamide avec une solution aqueuse comprenant un agent de stabilisation thermique.

Dans le domaine des fils industriels, c'est-à-dire des fils destinés généralement à la réalisation de tissus de câbles pour pneumatiques ou de sacs gonflables de sécurité, l'utilisation des polyamides est répandue. De tels fils en polyamide doivent être résistants à la chaleur et pour cela, il est connu d'utiliser un ou plusieurs agents de stabilisation thermique.

Les agents de stabilisation thermique usuels sont généralement des composés du cuivre, notamment des sels de cuivre (acétate, iodure, bromure etc.), souvent associés à des halogénures inorganiques tels que des halogénures de potassium ou de sodium, ces halogénures ayant pour rôle la régénération du cuivre in situ.

JP 48052846 décrit la formation de granulés de polyamide ayant une bonne résistance à l'oxydation par traitement desdits granulés avec 1/20- 200% d'eau et un halogénure inorganique, le iodure de potassium étant pris comme exemple.

JP 8325382 décrit des granulés de polyamide contenant un agent résistant à la chaleur dans lesquels la concentration dudit agent résistant à la chaleur diminue de la surface des particules de polyamide vers l'intérieur.

JP 6256649 décrit la fabrication d'une composition de polyamide dans laquelle une solution aqueuse d'un composé de cuivre et une solution aqueuse d'un halogénure inorganique sont ajoutées à et mélangées avec le polyamide, on forme un halogénure de cuivre à la surface du polyamide, puis le produit est séché.

Toutefois, les applications « câbles pour pneumatiques » et « sacs gonflables de sécurité » présentent des spécificités différentes en termes d'homogénéité de la matrice polymère.

En effet, les fils pour sacs gonflables de sécurité doivent présenter un titre plus fin par rapport aux fils destinés à la fabrication de câbles pour pneumatiques. L'exigence d'un titre fin fait que la matrice polymère doit être parfaitement homogène pour ne pas se rompre au cours du filage.

En outre, les fils ainsi obtenus ne doivent pas présenter de défauts pouvant entraîner leur rupture, ni de défauts d'aspect et ce afin de ne pas provoquer de dégradation des performances des procédés de mise en oeuvre (e.g. métiers à tisser) et ainsi être totalement fiables dans leur application.

Aujourd'hui, plusieurs procédés d'additivation d'agents stabilisants sont connus.

On connaît essentiellement trois techniques d'additivation : lors de la polymérisation, dans le polyamide fondu avant granulation ou juste avant l'étape de filage, ainsi que sur les granulés par exemple avant une étape de post condensation en phase solide de ces derniers.

L'additivation de trois solutions de stabilisation thermique : acétate de cuivre, iodure de potassium et bromure de potassium lors de la polymérisation du polyamide 66 est utilisée pour la fabrication de fils industriels.

Cependant, il est connu que les composés du cuivre ajoutés lors de la polymérisation subissent une réduction, qui forme des dépôts dans les appareillages (surtout dans les réacteurs non agités).

Un tel phénomène a pour conséquence d'obliger à un nettoyage fréquent des appareillages et donc engendre une perte de productivité des installations. En outre, le décrochage de ces dépôts cause des problèmes de manque d'homogénéité de la matrice ce qui a un impact négatif sur le filage.

De plus, la présence de bromure de potassium peut, dans certaines conditions, entraîner des problèmes de corrosion des appareillages.

En outre, l'additivation lors de la polymérisation limite la flexibilité des procédés industriels correspondants du fait des coûts associés aux changements de qualité des polymères fabriqués dans la même installation (temps de nettoyage, coût de la main d'oeuvre, produit de deuxième choix pendant la phase de rinçage...etc).

Pour pallier les problèmes susévoqués de l'additivation lors de la polymérisation, les industriels se sont orientés vers l'additivation tardive par imprégnation humide des granulés.

Par « imprégnation humide », on entend l'additivation de solutions aqueuses d'agent de stabilisation thermique sur des granulés de polyamide.

Ceci étant, ce type d'additivation de solutions aqueuses sur les granulés de polyamide, tel qu'il est proposé actuellement, présente un inconvénient majeur qui provient de l'utilisation d'une grande quantité d'eau via les solutions aqueuses de stabilisant thermique. L'eau, qui sert de solvant à l'agent de stabilisation thermique, vient mouiller les granulés pour les enduire de stabilisant thermique.

Dans les procédés existants, une quantité d'eau relativement élevée est nécessaire afin d'assurer l'homogénéité de l'additivation (mouillage des granulés).

Cette grande quantité d'eau provient aussi du souci de solubilisation des agents stabilisants. Il est d'ailleurs classique d'utiliser au moins deux solutions aqueuses pour solubiliser chacun des agents de stabilisation, comme par exemple l'acétate de cuivre d'une part et l'iodure de potassium ou le bromure de potassium d'autre part.

Cependant l'utilisation d'une telle quantité d'eau provoque l'agglomération des granulés entre eux. De ce fait, les granulés deviennent difficilement manipulables et, une fois agglomérés entre eux il est impossible d'obtenir une additivation homogène à la surface de ceux-ci. L'utilisation de deux solutions pose aussi des problèmes de complexité des appareillages qui doivent être équipés de deux alimentations différentes ou qui nécessitent une étape de rinçage entre les deux solutions afin d'éviter les problèmes de précipitation de composés insolubles du cuivre à l'origine de problèmes de qualité (pollution) et d'exploitation du procédé (encrassage).

De plus, les procédés existants nécessitent la mise en oeuvre d'une étape de séchage avant post-condensation en phase solide. Cette étape de séchage, actuellement indispensable, est coûteuse en énergie.

Pour tenter de résoudre ce problème, JP2004-231807 propose un procédé d'additivation d'une solution ou dispersion aqueuse d'halogénure inorganique dans lequel la quantité d'eau est réduite à une concentration en poids par rapport au poids de polyamide comprise entre 2 et 6 %. Cette quantité d'eau est certes réduite mais ce n'est pas suffisant pour s'affranchir des problèmes d'agglomération et de manque d'homogénéité à la surface des granulés additivés.

Ainsi, il existe toujours un besoin d'améliorer les procédés d'additivation d'agents de stabilisation thermique par imprégnation par voie humide sur des granulés de polyamide, notamment au travers de procédés permettant une additivation homogène, simples à mettre en oeuvre et minimisant les coûts relatifs à une étape ultérieure de séchage des granulés.

Un des buts de la présente invention est donc de proposer un procédé de préparation de granulés de polyamide ne présentant pas les inconvénients des procédés de l'art antérieur et notamment n'ayant pas de problème d'agglomération des granulés, minimisant l'effort de séchage des granulés additivés et permettant une additivation homogène de l'agent de stabilisation thermique à la surface des granulés. En outre, le procédé doit être simple à mettre en oeuvre, économique et répondant aussi bien aux exigences de qualité des fils polyamide pour la fabrication de tissus pour sacs gonflables de sécurité que celles des fils polyamide pour la fabrication de tissus de câbles pour pneumatiques.

L'invention répond à ce besoin en proposant un procédé de préparation de granulés de polyamide pour lui conférer des propriétés de résistance à la chaleur, par imprégnation humide des granulés de polyamide avec une solution aqueuse unique comprenant au moins un agent de stabilisation thermique, caractérisé par le fait que l'on met en contact les granulés de polyamide avec la solution aqueuse unique comprenant au moins un agent de stabilisation thermique, la quantité totale de solution aqueuse par rapport au polyamide étant inférieure ou égale à 1 % en poids, et par le fait que l'agent de stabilisation thermique est un mélange d'halogénure de métal alcalin ou alcalino-terreux et d'halogénure de cuivre, la quantité totale de solution aqueuse par rapport au polyamide étant la somme des quantités de solutions aqueuses utilisées, y compris l'eau provenant d'une éventuelle étape de rinçage.

L'invention vise également un procédé de fabrication de fils industriels et un procédé de fabrication d'articles tissés, dans lesquels on utilise des granulés de polyamide ainsi obtenus.

Le procédé selon l'invention fait intervenir des granulés de polyamide.

Les polyamides sont obtenus soit par réaction entre deux monomères différents, soit par polycondensation d'un seul monomère.

L'invention s'applique d'une part aux polyamides issus de deux monomères différents, dont le polyamide le plus important est le poly(hexaméthylène adipamide) ou polyamide 66. Bien entendu, ces polyamides peuvent être obtenus à partir d'un mélange de diacides et de diamines. Ainsi, dans le cas du polyamide 66, les monomères principaux sont l'hexaméthylène diamine et l'acide adipique. Toutefois, ces monomères peuvent comprendre jusqu'à 25 % en mole d'autres monomères diamines et/ou diacides et/ou même des monomères aminoacides et/ou lactames.

L'invention s'applique d'autre part aux polyamides issus d'un seul monomère, dont le polyamide le plus important est le polycaprolactame ou polyamide 6. Bien entendu, ces polyamides peuvent être obtenus à partir d'un mélange de lactames et/ou aminoacides. Ainsi, dans le cas du polyamide 6, le monomère principal est le caprolactame. Toutefois, ces monomères peuvent comprendre jusqu'à 25 % en mole d'autres monomères aminoacides et/ou lactames et/ou même des monomères diamines ou diacides.

La classe de polyamides issue de deux monomères différents est généralement fabriquée en utilisant comme matière première, un sel obtenu par mélange en quantité stoechiométrique d'un diacide avec une diamine, en général dans un solvant comme l'eau.

Ainsi, dans la fabrication du polyamide 66, l'acide adipique est mélangé avec de l'hexaméthylènediamine généralement dans de l'eau pour obtenir de l'adipate d'hexaméthylènediammonium plus connu sous le nom de sel Nylon ou "Sel N". La solution de sel N est éventuellement concentrée par évaporation partielle ou totale de l'eau.

La classe de polyamides issue d'un seul monomère est généralement fabriquée en utilisant comme matière première, un lactame et/ou un aminoacide, et une faible quantité d'eau ; la proportion en poids de l'eau est généralement comprise entre 1 et 15 %.

Le polyamide est obtenu par chauffage à température et pression élevées d'une solution aqueuse des monomères (par exemple une solution de sel Nylon telle que décrite ci-dessus), ou d'un liquide comprenant les monomères, pour évaporer l'eau tout en évitant toute formation de phase solide afin d'éviter une prise en masse.

L'étape de polymérisation est poursuivie jusqu'au degré de polymérisation souhaité.

Les procédés de polycondensation sont bien connus de l'homme de l'art. Il peut s'agir de procédés discontinus ou continus.

Des additifs peuvent être introduits au cours du procédé de polymérisation. On peut citer à titre d'exemples d'additifs, des matifiants comme le dioxyde de titane, des stabilisants lumière comme l'acétate de manganèse, des catalyseurs comme l'acide phénylphosphonique ou phénylphosphinique, des antimousses etc. Ces additifs sont connus de l'homme du métier. Cette liste n'a aucun caractère exhaustif.

De façon préférée, le polyamide est choisi parmi le polyamide 6, polyamide 11, le polyamide 12, le polyamide 4-6, le polyamide 5-6, le polyamide 6-6, le polyamide 6-10, le polyamide 6-12, le polyamide 9T, le polyamide 10T et leurs copolymères. Il peut également s'agir de copolymères comprenant des motifs issus de l'utilisation de monomères diacide du type acide isophtalique ou téréphtalique, ou bien de monomères diamine du type métaxylylène diamine ou paraxylylène diamine. On citera par exemple les motifs 4T, 6T, 6I, MXD6, PXD6...etc.

Selon un mode particulièrement avantageux de l'invention, on préfère le polyamide 6-6.

Le polyamide sous forme fondue issu de l'étape de polymérisation est généralement extrudé puis mis en forme, notamment sous forme de granulés.

Par « granulés », on entend au sens de la présente invention qu'il s'agit des particules solides de polyamide.

Les granulés utilisables dans le procédé de l'invention peuvent être de différentes formes. Ils peuvent par exemple être sous forme cylindrique, sphérique, elliptique etc.

Les granulés de polyamide sont obtenus par extrusion d'un polyamide sous forme fondue suivie d'une étape de granulation.

L'étape qui consiste à extruder le polyamide à l'état fondu à travers une filière est mise en oeuvre d'une manière classique et connue de l'homme du métier.

La filière est généralement placée en sortie de réacteur de polymérisation, ou en sortie d'une ligne de transfert alimentée par du polymère fondu à l'aide d'une pompe, ou en sortie d'un dispositif de malaxage pouvant générer une pression supérieure à la pression atmosphérique, généralement une extrudeuse.

En sortie de filière, le polyamide est généralement sous la forme de joncs ou de rubans, ou directement sous forme de granulés dans le cas par exemple d'une coupe en tête noyée.

L'étape de granulation comprend le refroidissement du polyamide obtenu après extrusion. Le refroidissement du matériau permet notamment de figer au moins superficiellement ce dernier.

Les dispositifs de refroidissement convenables pour une telle étape sont connus de l'homme du métier. Ce dispositif de refroidissement peut consister en un dispositif de pulvérisation d'eau froide situé à proximité du dispositif de la plaque de filière. Il peut également s'agir d'un bain ou d'un courant d'eau situé à proximité ou au contact du dispositif de la plaque de filière dans lequel le polyamide extrudé est introduit. Un dispositif de ruissellement d'eau peut également être mis en oeuvre.

Le polyamide ainsi refroidi est ensuite coupé sous la forme de granulés. Cette coupe peut également intervenir durant ou après l'étape de refroidissement.

Les dispositifs de coupe convenables pour cette étape sont connus de l'homme du métier. Le dispositif de coupe peut être un système de fraise avec des dents ; il peut également s'agir d'un système comprenant des couteaux et un porte-couteaux.

Dans le cas où le liquide de refroidissement, généralement de l'eau, est séparé des joncs ou des rubans de polymère avant la coupe, les joncs ou rubans sont coupés « à sec ».

Dans le cas où le liquide de refroidissement, généralement de l'eau, est séparé des granulés de polymère après la coupe sous forme de granulés, les granulés sont généralement également refroidis par le liquide de refroidissement, avant séparation de celui-ci d'avec les granulés.

Le dispositif de refroidissement peut consister en un dispositif de pulvérisation ou de circulation d'eau froide situé à proximité du dispositif de la plaque filière. C'est le cas des granulateurs à « coupe en tête» connus de l'homme du métier. Le dispositif de coupe et la plaque filière peuvent également être disposés dans une chambre remplie d'eau, il s'agit dans ce cas d'un granulateur à « coupe en tête noyée ». De tels dispositifs de granulateurs à « coupe en tête noyée » sont par exemple décrits dans le brevet américain US 5 059 103.

La granulation peut également être mise en oeuvre sur une plateforme de granulation, qui comprend généralement un dispositif de guidage et de refroidissement du polyamide extrudé, un dispositif de coupe et un dispositif de transfert vers un dispositif de séparation. Ces plateformes de granulation sont connues de l'homme du métier.

Les granulés de polyamide ont généralement un indice de viscosité (IV) compris entre 115 et 150 mL/g dans l'acide formique à 90 % en poids selon la norme ISO307, de préférence compris entre 125-140 mL/g dans l'acide formique à 90 % en poids selon la norme ISO307.

Selon une autre caractéristique de l'invention, les groupements terminaux des granulés de polyamides sont suffisament équilibrés pour ne pas limiter l'évolution de la masse molaire du polymère lors d'une éventuellement étape de post-condensation en phase solide. Ils présentent avantageusement une différence entre concentration en groupements terminaux carboxylique et amine Δ(GT) comprise entre 0 et 35 meq/kg, en valeur absolue.

Le procédé de préparation de granulés de polyamide présentant des propriétés de résistance à la chaleur selon l'invention fait également intervenir une solution aqueuse unique comprenant au moins un agent de stabilisation thermique.

L'agent de stabilisation thermique est un mélange d'halogénure de métal alcalin ou alcalino-terreux et d'halogénure de cuivre. Dans ce mélange, le rôle de stabilisant thermique est assuré par l'halogénure de cuivre, l'halogénure de métal alcalin ou alcalino-terreux sert quant à lui à régénérer le cuivre oxydé. De préférence, l'halogénure de métal alcalin est l'iodure de potassium ou de sodium et l'halogénure de cuivre est l'iodure de cuivre.

On préfère particulièrement que l'agent de stabilisation thermique soit un mélange d'iodure de potassium et d'iodure de cuivre.

Selon l'invention, une étape de rinçage à l'aide d'un liquide de rinçage, par exemple de l'eau, est de préférence réalisée après la mise en contact des granulés avec la solution aqueuse.

De façon particulièrement avantageuse et afin de s'affranchir de tout problème de dépot du bromure de métal alcalin ou alcalino-terreux à la surface des granulés, les solutions aqueuses utilisées dans l'invention sont exemptes de bromure de métal alcalin ou alcalino-terreux, l'iodure de métal alcalin ou alcalino-terreux étant alors choisi.

Selon l'invention, la quantité totale de solution aqueuse par rapport au polyamide est avantageusement comprise entre 0,15 et 1 % en poids, de préférence entre 0,20 et 1 % en poids et encore plus préférentiellement entre 0,3 et 0,9 % en poids.

Au-delà de 1 % en poids de solution aqueuse par rapport au polyamide, la quantité d'eau résiduelle pénalise la productivité des étapes de séchage des granulés et/ou de post-condensation ultérieures. A partir de 2 % en poids de solution aqueuse par rapport au polyamide, on commence à observer des phénomènes d'agglomération des granulés entre eux. Au-delà de 3 % en poids de solution aqueuse par rapport au polyamide, l'homogénéité de l'additivation se dégrade et le phénomène d'agglomération des granulés entre eux est très important.

Le ratio entre le nombre de moles d'halogénure et le nombre de moles de cuivre est de préférence supérieur ou égal à 7 : 1. De préférence, ce ratio est supérieur ou égal à 10 : 1. La borne supérieure, pour des raisons de compromis entre les propriétés de stabilisation thermique souhaitées et les contraintes économiques, est avantageusement choisie inférieure ou égale à 25 : 1, de préférence inférieure ou égale à 15 : 1.

Par ailleurs, la quantité d'agent de stabilisation thermique dans la solution aqueuse dépend de la limite de solubilité de l'agent de stabilisation thermique dans cette solution aqueuse. De préférence, la quantité d'agent de stabilisation thermique dans la solution aqueuse est inférieure ou égale à la limite de solubilité de l'agent de stabilisation thermique. Ainsi, dans le cas où l'agent de stabilisation thermique est un mélange d'iodure de potassium et d'iodure de cuivre alors, l'iodure de cuivre est avantageusement présent dans une quantité inférieure ou égale à 6 % en poids dans une solution aqueuse d'iodure de potassium à environ 50 % en poids.

Dans le cas où l'agent de stabilisation thermique est un mélange de bromure de potassium et de bromure de cuivre (CuBr₂) alors, le bromure de cuivre est avantageusement présent dans une quantité inférieure ou égale à 15 % en poids dans une solution aqueuse de bromure de potassium à 30 % en poids.

La mise en contact des granulés avec la solution aqueuse peut s'effectuer à température ambiante (TA, environ 20°C) ou à une température supérieure. La température dont il est question est celle des granulés. De préférence, la mise en contact ne devra pas être réalisée à une température supérieure à la température d'ébullition (Teb) de la solution aqueuse comprenant l'agent de stabilisation thermique.

De façon particulièrement avantageuse, la mise en contact est réalisée à une température supérieure à la température de transition vitreuse du polyamide (Tg).

La température pour la mise en contact est donc avantageusement comprise entre la température ambiante et la température d'ébullition de la solution aqueuse comprenant l'agent de stabilisation thermique (de TA à Teb) et plus préférentiellement entre la température de transition vitreuse du polyamide et la température d'ébullition de la solution aqueuse comprenant l'agent de stabilisation thermique (de Tg à Teb).

De façon préférée pour le polyamide 66, la mise en contact a lieu sur des granulés dont la température se situe entre 20°C et 100°C, de préférence entre 80°C et 95°C.

Généralement, la mise en contact est réalisée dans une enceinte à pression atmosphérique.

Selon une variante préférée du procédé de l'invention, on conduit le procédé de l'invention, sous atmosphère contrôlée de gaz inerte. On peut établir une atmosphère de gaz rares, de préférence l'argon mais il est plus économique de faire appel à l'azote.

La mise en contact des granulés de polyamide avec la solution aqueuse comprenant au moins un agent de stabilisation thermique s'effectue avantageusement par pulvérisation de la solution aqueuse.

La pulvérisation s'effectue avantageusement au moyen d'une buse de pulvérisation type jet plat qui distribue le liquide uniformément sous forme de lame et fournit le plus grand impact par unité de surface. La pulvérisation peut se faire par exemple à une pression de pulvérisation comprise entre 1 et 5 bars, de préférence d'environ 3 bars. La pulvérisation a une durée qui dépend de la quantité de polymère à traiter.

Lorsqu'une étape de rinçage à l'aide d'un liquide de rinçage, par exemple de l'eau, est prévue, celle-ci s'effectue également par pulvérisation au moyen de la même buse de pulvérisation que celle utilisée pour la solution aqueuse comprenant au moins un agent de stabilisation thermique. L'étape de rinçage peut être consécutive à l'étape de mise en contact des granulés de polyamide avec la solution aqueuse comprenant au moins un agent de stabilisation thermique. De préférence, la pulvérisation de la solution de rinçage a lieu moins d'une minute après celle de la solution aqueuse comprenant au moins un agent de stabilisation thermique.

L'étape de pulvérisation de la solution aqueuse comprenant au moins un agent de stabilisation thermique est de préférence réalisée sur des granulés maintenus sous agitation par exemple au moyen d'un mélangeur à pales. Tout autre mélangeur connu de l'homme de l'art peut également convenir.

Le mélange (ou agitation) et la pulvérisation de la solution aqueuse comprenant au moins un agent de stabilisation thermique commencent avantageusement simultanément. Le mélange des granulés peut aussi commencer avant le début de la pulvérisation de la solution aqueuse comprenant au moins un agent de stabilisation thermique.

La durée de l'étape de pulvérisation est calculée de façon à être compatible avec un renouvellement de la surface en contact avec la solution aqueuse pulvérisée. Le renouvellement de la surface peut être assimilé à un temps de mélange, c'est-à-dire à la durée nécessaire pour obtenir un degré d'homogénéisation souhaité à partir d'une situation d'hétéréogénéité donnée. Cette durée dépend de l'équipement utilisé et peut être définie aisément par l'homme du métier par des essais de routine.

La vitesse de mélange dépend du volume de granulés à traiter ainsi que de l'équipement utilisé. L'homme de l'art sait parfaitement comment ajuster ce paramètre.

De façon avantageuse, la pulvérisation de la solution aqueuse comprenant au moins un agent de stabilisation thermique s'effectue sur des granulés sous agitation, et on maintien ensuite l'agitation. L'agitation (ou mélange) des granulés après pulvérisation de la solution aqueuse comprenant au moins un agent de stabilisation thermique a une durée de 0,1 à 40 minutes, de préférence de 5 et 30 minutes.

A température ambiante, il faut compter généralement un temps de mélange après pulvérisation de la solution aqueuse compris entre 10 et 40 minutes, de préférence entre 15 et 30 minutes.

Lorsque la température est supérieure à la température de transition vitreuse du polyamide, le temps de mélange après pulvérisation est généralement de l'ordre de 1 à 10 minutes, de préférence de 2 à 5 minutes.

D'un point de vue pratique, le procédé peut être mis en oeuvre en discontinu ou en continu.

Pour illustrer le procédé de l'invention, des exemples de mise en oeuvre sont décrits ci-dessous.
1) Dans un mélangeur à pales sous courant d'azote, équipé d'une buse de pulvérisation, on introduit sous azote des granulés de polyamide 66. Les granulés ont une température d'environ 85°C. On démarre l'agitation à une vitesse de 150 rpm et on pulvérise ensuite la solution aqueuse comprenant au moins un agent de stabilisation thermique, au moyen de la buse de pulvérisation, à une pression de 3 bars. Après pulvérisation de la solution aqueuse comprenant au moins un agent de stabilisation thermique, on pulvérise éventuellement le liquide de rinçage et on maintient les granulés sous agitation à une vitesse de 150 rpm pendant 5 minutes. On décharge ensuite les granulés ainsi additivés sous couverture d'azote.
2) Dans un mélangeur à pales équipé d'une buse de pulvérisation, on introduit des granulés de polyamide 66. Les granulés sont à température ambiante, environ 20 °C. On démarre simultanément l'agitation à une vitesse de 150 rpm et la pulvérisation de la solution aqueuse comprenant au moins un agent de stabilisation thermique, au moyen de la buse de pulvérisation, à une pression de 3 bars. Après pulvérisation de la solution aqueuse comprenant au moins un agent de stabilisation thermique, on pulvérise éventuellement le liquide de rinçage et on maintient les granulés sous agitation à une vitesse de 150 rpm pendant 20 minutes. On décharge ensuite les granulés ainsi additivés.

Les granulés ainsi additivés peuvent être directement utilisés dans un procédé de filage en fondu, de préférence après avoir subi une étape de séchage.

Selon un mode avantageux de réalisation de l'invention, les granulés de polyamide obtenus après la mise en contact avec la solution aqueuse unique comprenant au moins un agent de stabilisation thermique sont soumis directement à une étape de post condensation en phase solide (PCS) qui peut être conduite en mode continu ou discontinu.

Cette étape de PCS est avantageusement conduite dans les conditions suivantes : sous un flux d'azote ou à pression réduite, et à une température comprise entre 160 et 220°C pendant le temps nécessaire pour atteindre la masse molaire souhaitée.

Il est à noter qu'il n'est pas nécessaire à ce stade de réaliser une étape de séchage des granulés avant PCS. Cet aspect présente l'avantage de limiter les phénomènes de dégradation thermique pouvant survenir au séchage.

Conformément au procédé de l'invention, on obtient des granulés de polyamide additivés de façon homogène à leur surface par un agent de stabilisation thermique. Par « à leur surface » on entend que l'agent de stabilisation thermique se trouve juste en dessous de la surface des granulés, c'est-à-dire que la plus grande concentration en agent de stabilisation thermique se situe à environ 40 µm en dessous de la surface. Ainsi, les granulés additivés ne posent aucun problème lors de leur manipulation qui pourrait engendrer un défaut d'homogénéité de l'additivation, l'apparition de fines et un comportement détérioré (casse, défauts) lors du filage.

De plus, les granulés ainsi obtenus ne s'agglomèrent pas entre eux.

En outre, de tels granulés répondent aussi bien aux exigences de qualité des fils polyamide pour la fabrication de tissus pour sacs gonflables de sécurité que celles des fils polyamide pour la fabrication de tissus de câbles pour pneumatiques.

Une des particularités du procédé de l'invention est que les granulés ayant subi une étape de PCS après l'additivation sont stabilisés « à coeur ». Il n'y a plus de gradient de concentration de l'agent de stabilisation thermique entre la surface et le coeur du granulé. Un tel granulé présente donc, du point de vue de la stabilisation thermique, les mêmes caractéristiques qu'un granulé additivé à la polymérisation.

Les propriétés de résistance à la chaleur des fils industriels obtenus à partir des granulés stabilisés par le procédé de l'invention sont évaluées par mesure de la ténacité après avoir subi un test de vieillissement.

Le procédé selon l'invention ci-dessus décrit permet d'obtenir des granulés de polyamide additivés de manière homogène à leur surface par un agent de stabilisation thermique.

Le procédé de l'invention est particulièrement intéressant car il ne présente pas les inconvénients des procédés de l'art antérieur et notamment le problème d'agglomération des granulés et ne nécessite pas d'étape de séchage des granulés additivés. Il est en outre simple à mettre en oeuvre dans des installations industrielles et économiquement performant car productif.

Le procédé de l'invention présente également l'avantage de fournir des granulés utilisables aussi bien pour la fabrication de fils polyamide pour tissus pour sacs gonflables de sécurité que pour la fabrication de fils polyamide pour tissus de câbles pour pneumatiques.

De plus, dans son mode préférentiel où la solution aqueuse est exempte de bromure de métal alcalin ou alcalino-terreux, le procédé s'affranchit des phénomènes de dépôt de celui-ci à la surface des granulés, notamment en fonction de l'humidité de ceux-ci. Ce phénomène n'est pas acceptable, notamment dans le domaine des sacs gonflables de sécurité puisqu'il conduit à la formation de fines, qui, lors de la PCS, forment des particules solides riches en agent de stabilisation thermique engendrant des problèmes de mauvais comportement ou défauts au filage.

La présente invention vise également l'utilisation l'utilisation des granulés de polyamide ainsi obtenus pour la fabrication de fils industriels et les fils industriels ainsi obtenus.

D'autres objets de l'invention sont des articles obtenus à partir des fils industriels selon l'invention, notamment des articles tissés tels des tissus pour sacs gonflables de sécurité ou des tissus de câbles pour pneumatiques.

On donne ci-après des exemples de réalisation de l'invention, à titre illustratif et sans caractère limitatif.

Dans les exemples, les abréviations suivantes signifient :
CuI : iodure de cuivre, KI : iodure de potassium
CuBr₂ : bromure de cuivre, KBr : bromure de potassium ; AgNO₃ : nitrate d'argent
ICP : plasma à couplage inductif ; OES : spectrométrie d'émission optique
EDX : spectrométrie dispersive aux rayons X
GPC-PM : chromatographie en phase gazeuse - petites masses
GTC : concentration en groupements terminaux carboxylique ;
GTA : concentration en groupements terminaux amine

### EXEMPLES

### 1- Préparation des solutions aqueuses comprenant au moins un agent de stabilisation thermique :

### 1.1 - Solution unique de CuI/KI :

Pour préparer 200 g de solution aqueuse unique de CuI/KI, on utilise un mélangeur avec agitation préalablement nettoyé et rincé à l'eau déminéralisée dans lequel on introduit 80 g d'eau déminéralisée, puis 94,9 g d'iodure de potassium et le reste d'eau déminéralisée 14,9 g. On agite pendant une heure. La réaction de dissolution est très exothermique. On ajoute ensuite 10,2 g d'iodure de cuivre et on agite pendant 20 minutes. La solution aqueuse ainsi obtenue est filtrée et stockée dans un récipient en verre brun.

La composition de la solution est vérifiée par analyse élémentaire (potentiométrie avec AgNO₃ pour l'iode et ICP/OES pour le cuivre et le potassium).

### 1.2 - Solution unique de CuBr₂/KBr :

Pour préparer 200 g de solution aqueuse unique de CuBr₂/KBr, on utilise un mélangeur avec agitation préalablement nettoyé et rincé à l'eau déminéralisée dans lequel on introduit 120 g d'eau déminéralisée, puis 58 g de bromure de potassium et le reste d'eau déminéralisée 15,5 g. On agite pendant une heure. La réaction de dissolution est très exothermique. On ajoute ensuite 6,5 g de dibromure de cuivre et on agite pendant 20 minutes. La solution aqueuse ainsi obtenue est filtrée et stockée dans un récipient en verre brun.

La composition de la solution est vérifiée par analyse élémentaire (potentiométrie avec AgNO₃ pour le brome et ICP/OES pour le cuivre et le potassium).

### 2- Préparation des granulés de polyamide :

Un polyamide 6,6 est préparé à partir d'une solution aqueuse de Sel N à 52 % en poids chargée dans un évaporateur à recirculation externe avec 9 ppm d'antimousse (composition silicone). La solution de Sel N est concentrée par chauffage jusqu'à 154,0°C sous une pression de 0,24 MPa. A la fin de l'évaporation, la concentration en espèces dissoutes de la solution est de 85,0 % en poids. Cette solution est alors transférée dans un autoclave. L'autoclave est chauffé de façon à obtenir une pression autogène de 1,85 MPa. La phase de polymérisation sous pression dure 42 min, puis la pression est réduite graduellement jusqu'à la pression atmosphérique. Le réacteur est ensuite maintenu sous pression atmosphérique pendant 20 minutes et la température atteinte par la masse réactionnelle à la fin de cette étape est de 277°C. Puis le réacteur est mis sous une pression d'azote comprise entre 0,4 et 0,5 MPa pour pouvoir extruder le polymère sous forme de joncs, refroidis à l'eau et coupés de manière à obtenir des granulés.

Le polyamide 6,6 obtenu a un indice de viscosité de 134 mL/g mesuré dans l'acide formique à 90 %, à une concentration de 0,5 g/100 mL. Son taux d'humidité est de 0,3 % mesuré par Karl-Fischer et sa granulométrie de 25 mg par granulé.

Le polyamide 6,6 obtenu a un Δ(GT) = GTC - GTA = 68,6 - 53,7 = 14,9 mmol/kg.

### 3- Additivation par imprégnation humide

Les essais d'imprégnation humide des granulés sont tous réalisés dans un mélangeur horizontal MLH 12L de MAP (WAMGROUP) équipé d'une double enveloppe pouvant être chauffée ou refroidie, d'un mobile d'agitation type socs de charrue et d'un système d'injection de liquide. La buse d'injection utilisée est une buse TEEJET avec un débit de 0,1 L/min et une angle de projection de 50° sous une pression de 0,3 MPa.

Pour optimiser le mélange, la cuve du mélangeur est remplie à 60 % de son volume c'est-à-dire environ 4,7 kg de polyamide vierge. Lors d'une imprégnation sur granulés chauds, la double enveloppe du mélangeur est préalablement chauffée à 90°C.

Les granulés de polymère sont chargés dans la cuve du mélangeur puis on réalise un inertage à l'azote pendant 5 minutes au cours desquelles l'agitation est mise en route à 150 rpm. Cette valeur a été choisie pour optimiser le mélange et limiter les phénomènes d'abrasion des granulés. Ensuite, on effectue l'injection de la solution aqueuse de stabilisants thermiques en chargeant la quantité de solution nécessaire pour obtenir la quantité souhaitée. Le système d'introduction de liquide est mis sous 0,3 MPa de pression d'azote et on ouvre la vanne reliant ce sas à la buse d'injection. Après une minute, on referme la vanne du sas d'introduction de liquide. L'eau de rinçage est introduite dans le sas puis celui-ci est remis sous pression à 0,3 MPa d'azote pour pouvoir injecter l'eau de rinçage par la buse d'injection. A la fin de cette opération, on décompte le temps dit de mélange avant l'arrêt de l'agitation et la vidange du polyamide.

Les conditions d'additivation : températures des granulés, le type de stabilisants thermiques, les quantités de solution de stabilisants thermiques et eau de rinçage, le temps de mélange sont spécifiés pour les exemples comparatifs dans le tableau 1 et pour les exemples selon l'invention dans le tableau 2.

### 4- Tableau récapitulatif des conditions d'additivation

### 4.1 - Exemples comparatifs :

1' : quantité totale de solution aqueuse en poids / poids de polyamide = 2 %
2' : quantité totale de solution aqueuse en poids / poids de polyamide = 3 %

**Tableau 1 : Exemples comparatifs**

| **Ex. comp.** | | **Additifs** | | | | | | | **Procédé d'additivation** | | |
|---|---|---|---|---|---|---|---|---|---|---|---|
| | | **Type** | **Stabilisants thermiques (ppm)** | | | | **Quantité Solution (g)** | **Eau rinçage (g)** | **T°C Granulés (°C)** | **Vitesse Agitation (rpm)** | **Temps Mélange (min)** |
| | | | **Cu** | **Br** | **I** | **K** | | | | | |
| | | | | | | | | | | | |
| 1' | a | **CuI/KI** | **60** | **0** | **1400** | **393** | **16,6** | **77,4** | 20 | 150 | 5 |
| | b | | | | | | | | | | 15 |
| | c | | | | | | | | | | 30 |
| | | | | | | | | | | | |
| 2' | a | **CuI/KI** | **60** | **0** | **1400** | **393** | **16,6** | **124,4** | 20 | 150 | 5 |
| | b | | | | | | | | | | 15 |
| | c | | | | | | | | | | 30 |

### 4.2 - Exemples selon l'invention : qté sol aqueuse = max 1 %

1 : quantité totale de solution aqueuse en poids / poids de polyamide = 1 %
2 : quantité totale de solution aqueuse en poids / poids de polyamide = 1 %

**Tableau 2 : Exemples selon l'invention**

| **Ex** | | **Additifs** | | | | | | | **Procédé d'additivation** | | |
|---|---|---|---|---|---|---|---|---|---|---|---|
| | | **Type** | **Stabilisants thermiques (ppm)** | | | | **Quantité Solution (g)** | **Eau rinçage (g)** | **T Granulés (°C)** | **Vitesse Agitation (rpm)** | **Tps Mélange (min)** |
| | | | **Cu** | **Br** | **I** | **K** | | | | | |
| | | | | | | | | | | | |
| 1 | a | **CuI /KI** | **60** | **0** | **1400** | **393** | **16,6** | **30,4** | 20 | 150 | 5 |
| | b | | | | | | | | | | 15 |
| | c | | | | | | | | | | 30 |
| | d | | | | | | | | 90 | | 5 |
| | e | | | | | | | | | | 15 |
| | f | | | | | | | | | | 30 |
| | | | | | | | | | | | |
| 2 | a | **CuBr₂ /KBr** | **60** | **1400** | **0** | **646** | **30,28** | **16,72** | 20 | 150 | 5 |
| | b | | | | | | | | | | 15 |
| | | | | | | | | | | | 30 |
| | c | | | | | | | | 90 | | 5 |
| | e | | | | | | | | | | 15 |
| | f | | | | | | | | | | 30 |

### 5- Résultats

### 5.1. Les granulés

### Description des tests et mesures effectuées sur les granulés additivés

### Dosage du Cuivre et du Potassium par ICP

0,5 g de granulés de polyamide sont introduits dans une bombe de Paar avec 5 ml d'acide nitrique. La minéralisation du polyamide se fait dans un four à microondes. A la fin de la minéralisation, la matière est récupérée avec de l'eau et transvasée en fiole de 50 ml ajustée avec de l'eau.

Le cuivre et le potassium sont dosés par ICP/OES avec étalonnage externe en milieu HNO₃ 10 % volumique.

### Dosage de l'Iode et du Brome par argentimétrie

Peser exactement 0,5 g de granulés de polyamide, 2 g de solution à 0,06 M de sulfite de sodium, 6 g d'eau osmosée et ajouter ensuite 50 ml d'acide formique à 90 % en poids. Laisser dissoudre sous agitation pendant envrion 1 heure. Quand le polyamide est dissout, ajouter 8 g d'eau. Le dosage potentiométrique de l'iode et du brome se fait avec une solution de nitrate d'argent (AgNO₃) à 0,02 M.

### Analyses par microscopie électronique à balayage

Pour les analyses de l'état de surface des granulés, 2 granulés sont collés sur une pastille de carbone puis métallisés au platine.

Pour observer l'intérieur du granulé, 2 granulés sont inclus dans une résine époxy Araldite® (pour faciliter leur manipulation) puis ils sont arasés au couteau. Ces coupes sont collées sur une pastille de carbone puis métallisés au platine.

Les différentes préparations sont observées au Microscope Electronique à Balayage (MEB) sous 15 kV avec analyse EDX.

### Dégradation thermique par spectophotométrie UV

0,8 g de granulés de polyamide sont ajoutés dans 20 ml de mélange trifluoroéthanol/chloroforme (10/3 volumique). Laisser dissoudre sous agitation pendant envrion 1 heure. La solution est ensuite transvasée dans une cuve en quartz, placée dans le spectromètre pour l'acquisition du spectre entre 600 et 240 nm. Les indices UV sont calculés pour les pics situés vers 285 et 330 nm.

### Tableau comparatif des résultats

**Tableau 3 : Résultats des exemples comparatifs**

| **Exemples comparatifs** | | **Additifs** | | | | | **Dégradation thermique** | | **Microscopie** |
|---|---|---|---|---|---|---|---|---|---|
| | | **Type** | **Stabilisants thermiques (ppm)** | | | | **UV 330** | **UV 285** | **Présence cristaux en surface** |
| | | | **Cu** | **Br** | **I** | **K** | | | |
| | | | | | | | | | |
| 1' | a | **CuI/KI** | 55 | | 1290 | 360 | 0 | 0 | non |
| | b | | 56 | | 1300 | 360 | | | |
| | c | | 56 | | 1310 | 370 | | | |
| | | | | | | | | | |
| 2' | a | **CuI/KI** | 48 | | 1115 | 315 | 0 | 0 | non |
| | b | | 50 | | 1120 | 320 | | | |
| | c | | 49 | | 1120 | 320 | | | |

**Tableau 4 : Résultats des exemples selon l'invention**

| **Exemples** | | **Additifs** | | | | | **Dégradation thermique** | | **Microscopie** |
|---|---|---|---|---|---|---|---|---|---|
| | | **Type** | **Stabilisants thermiques (ppm)** | | | | **UV 330** | **UV 285** | **Présence cristaux en surface** |
| | | | **Cu** | **Br** | **I** | **K** | | | |
| | | | | | | | | | |
| 1 | a | **CuI/KI** | 57 | | 1340 | 360 | 0 | 0 | non |
| | b | | 57 | | 1360 | 370 | | | |
| | c | | 58 | | 1370 | 370 | | | |
| | d | | 56 | | 1370 | 400 | | | |
| | e | | 57 | | 1370 | 390 | | | |
| | f | | 58 | | 1370 | 380 | | | |
| | | | | | | | | | |
| 2 | a | **CuBr2/KBr** | 55 | 1152 | | 475 | 0 | 0 | oui |
| | b | | 55 | 1172 | | 530 | | | |
| | c | | 55 | 1195 | | 518 | | | |
| | d | | 56 | 1135 | | 447 | | | |
| | e | | 57 | 1077 | | 463 | | | |
| | f | | 56 | 1097 | | 441 | | | |

### Conclusions

Les résultats des essais d'imprégnation de granulés réalisée avec 2 % de solution aqueuse par rapport au poids de granulés (ex 1') montrent un léger manque d'additif par rapport à la cible et un manque d'homogénéité. De plus, il apparaît un léger phénomène d'agglomération des granulés entre eux et sur la paroi du mélangeur qui ne facilite pas la manipulation.

Les résultats des essais d'imprégnation de granulés réalisée avec 3 % de solution aqueuse par rapport au poids de granulés (ex 2') montrent un réel manque d'additif par rapport à la cible (∼ 20%) et une forte hétérogénéité. De plus, il apparaît un phénomène d'agglomération important des granulés entre eux et sur la paroi du mélangeur qui rend difficile la manipulation.

Les résultats des essais d'imprégnation de granulés réalisée avec la solution de **CuI/KI** à max 1 % de solution aqueuse par rapport au poids de granulés (ex 1) sont à la cible et homogènes. Lors de l'imprégnation à température ambiante, il est préférable de mélanger pendant 15 minutes pour avoir la même homogénéité qu'après 5 minutes à 90°C.

Les résultats des essais d'imprégnation de granulés réalisée avec la solution de CuBr₂/KBr (ex 2), la présence de cristaux de KBr est observée en surface des granulés.

Dans tous les cas, l'imprégnation des granulés réalisée à 90°C n'entraîne pas de dégradation thermique spécifique du polymère et on observe un gradient d'éléments thermo-stabilisants en dessous de la surface des granulés.

### 5.2. Les fils

### Description des post traitements réalisés

### Post-condensation à l'état solide

Afin d'augmenter suffisamment la masse moléculaire en nombre des polymères, une étape de post-condensation à l'état solide est réalisée sur chaque lot de 4,7 kg de polymère additivé tardivement. Cette post-condensation à l'état solide est effectuée dans un évaporateur rotatif de 50 L. Les granulés sont chauffés à 195°C sous 500 L/h d'azote pendant 270 min.

### Filage - étirage

Le polymère postcondensé est filé puis étiré dans des conditions standards pour des fils industriels afin d'obtenir des fils 940/136.

### Description des tests et mesures effectuées les fils

Les fils subissent un vieillisement thermique dans une étuve à 165°C pendant 168 heures sous ventilation à l'air forcée.

Les échantillons de fils avant et après vieillissement sont soumis à des tests mécaniques sur une machine standard de traction afin de déterminer les pertes de tenacité, de contrainte et élongation à la rupture après vieillissement. Ces tests sont réalisés à une vitesse de 500 mm/min avec une distance entre mords de 200 mm et une prétension de 300 g. On mesure également le pourcentage de perte pour l'indice de viscosité, les indices de viscosité ayant été mesurés en solution à 0,5% dans l'acide formique à 90%. Les résultats de pourcentage de perte des paramètres mesurés sont rapportés dans le tableau 6 ci-après.

Afin de comparer l'impact de l'additivation tardive des stabilisants thermiques sur la dégradation thermique des granulés pendant la post-condensation solide et des fils pendant le filage et l'étirage et sur les propriétés mécaniques des fils après vieillissement, un polymère pour fils industriels avec addition des stabilisants thermiques pendant l'étape de polymérisation a été utilisé comme référence (Cf tableau 5 ci-dessous). Ce polymère est stabilisé avec des solutions aqueuses d'acétate de cuivre, de bromure et iodure de potassium et a été produit avec le même procédé industriel et dans le même réacteur que le polymère vierge utilisé pour l'additivation tardive.

**Tableau 5 : Résultats de caractérisation des granulés après post-condensation solide**

| **Exemples** | | **Additifs** | | | | | **Viscosité** | **Dégradation thermique** | |
|---|---|---|---|---|---|---|---|---|---|
| | | **Type** | **Stabilisants thermiques (ppm)** | | | | **IV mL/g** | **UV 330** | **UV 285** |
| | | | **Cu** | **Br** | **I** | **K** | | | |
| | | | | | | | | | |
| Comparatif | | **CuBrI** | 59 | 406 | 924 | 470 | 180 | + | ++ |
| | | | | | | | | | |
| 1 | c | **CuI/KI** | 59 | | 1399 | 380 | 180 | + | ++ |
| | d | | 56 | | 1395 | 380 | 180 | + | ++ |
| | f | | 57 | | 1408 | 390 | 178 | + | ++ |

**Tableau 6 : Résultats de caractérisation des fils après le test de vieillissement**

| Mesure | **Comparatif** | **1 c** | **1 d** | **1 f** |
|---|---|---|---|---|
| Contrainte à la rupture (% de perte) | 27,1% | 24,4% | 24,7% | 24,2% |
| Elongation à la rupture (% de perte) | 18,5% | 11,0% | 11,3% | 10,6% |
| Tenacité (% de perte) | 27,1% | 24,4% | 24,7% | 24,1% |
| IVN (% de perte) | 3,2% | 1,8% | 1,7% | 1,9% |

On constate que la dégradation des propriétés mécaniques des fils après vieillissement est plus faible pour les fils obtenus à partir du procédé selon l'invention que pour les fils obtenus à partir du procédé de l'exemple comparatif.

De même, la baisse d'indice de viscosité des fils obtenus à partir du procédé selon l'invention est moindre que celle des fils selon l'exemple comparatif.

### Conclusions

Les granulés additivés selon le procédé de l'invention se comportent de la même manière que la référence stabilisée à la polymérisation pendant la phase de post-condensation solide et ne présentent pas une dégradation thermique différente. Aucune perte de stabilisants thermiques n'est observée après la phase de post-condensation solide.

Les tests de vieillissement sur fils montrent une plus faible dégradation des propriétés mécaniques des fils obtenus à partir du procédé selon l'invention.

## Revendications

1. Procédé de préparation de granulés de polyamide présentant des propriétés de résistance à la chaleur, par imprégnation humide des granulés de polyamide avec une solution aqueuse unique comprenant au moins un agent de stabilisation thermique, **caractérisé par le fait que** l'on met en contact les granulés de polyamide avec la solution aqueuse unique comprenant au moins un agent de stabilisation thermique, la quantité totale de solution aqueuse par rapport au polyamide étant inférieure ou égale à 1 % en poids, et **par le fait que** l'agent de stabilisation thermique est un mélange d'halogénure de métal alcalin ou alcalino-terreux et d'halogénure de cuivre, la quantité totale de solution aqueuse par rapport au polyamide étant la somme des quantités de solutions aqueuses utilisées, y compris l'eau provenant d'une éventuelle étape de rinçage.

2. Procédé selon la revendication 1, dans lequel l'halogénure de métal alcalin est l'iodure de potassium ou de sodium, et/ou l'halogénure de cuivre est l'iodure de cuivre.

3. Procédé selon la revendication 2 , dans lequel l'agent de stabilisation thermique est un mélange d'iodure de potassium et d'iodure de cuivre.

4. Procédé selon l'une des revendications 1 à 3, dans lequel le ratio entre le nombre de moles d'halogénure et le nombre de moles de cuivre est supérieur ou égal à 7 : 1.

5. Procédé selon la revendication 3, dans lequel l'iodure de cuivre est présent dans une quantité inférieure ou égale à 6 % en poids dans une solution aqueuse d'iodure de potassium à 50 % en poids.

6. Procédé selon l'une des revendications 1 à 5, dans lequel une étape de rinçage à l'eau est réalisée après la mise en contact des granulés avec la solution aqueuse unique comprenant au moins un agent de stabilisation thermique.

7. Procédé selon l'une des revendications 1 à 6, dans lequel la quantité de solution aqueuse par rapport au polyamide est comprise entre 0,15 et 1 % en poids.

8. Procédé selon l'une des revendications 1 à 7, dans lequel le polyamide est du polyamide 66.

9. Procédé selon l'une des revendications 1 à 8, dans lequel la mise en contact des granulés de polyamide avec la solution aqueuse comprenant au moins un agent de stabilisation thermique s'effectue par pulvérisation de la solution aqueuse comprenant au moins un agent de stabilisation thermique.

10. Procédé selon l'une des revendications 1 à 9, dans lequel les granulés de polyamide obtenus après la mise en contact avec au moins la solution aqueuse comprenant au moins un agent de stabilisation thermique sont soumis directement à une étape de post condensation en phase solide.

11. Procédé de fabrication de fils industriels selon lequel on fabrique des granulés de polyamide par le procédé d'une des revendications 1 à 10 et on utilise ces granulés pour en fabriquer des fils industriels.

12. Procédé selon la revendication 11, dans lequel les fils industriels sont obtenus par filage des granulés issus du procédé selon l'une des revendications 1 à 10.

13. Procédé de fabrication d'articles tissés selon lequel des fils industriels sont obtenus par le procédé de la revendication 11 ou 12, et les articles sont obtenus à partir de ces fils.

14. Procédé selon la revendication 13, dans lequel les articles sont des sacs gonflables de sécurité ou des câbles pour pneumatiques.

## Patentansprüche

1. Verfahren zur Herstellung von Polyamidgranulat, das Wärmebeständigkeitseigenschaften aufweist, durch Nassimprägnieren des Polyamidgranulats mit einer einzigen wässrigen Lösung, die mindestens ein thermisches Stabilisierungsmittel umfasst, **dadurch gekennzeichnet, dass** das Polyamidgranulat mit der einzigen wässrigen Lösung in Kontakt gebracht wird, die mindestens ein thermisches Stabilisierungsmittel umfasst, wobei die Gesamtmenge an wässriger Lösung, bezogen auf das Polyamid, kleiner oder gleich 1 Gew.% ist, und dass das thermische Stabilisierungsmittel eine Mischung aus Alkalimetallhalogeniden oder Erdalkalimetallhalogeniden und Kupferhalogenid ist, wobei die Gesamtmenge an wässriger Lösung, bezogen auf das Polyamid, die Summe der Mengen der verwendeten wässrigen Lösungen einschließlich des Wassers, das von einem eventuellen Spülschritt stammt, ist.

2. Verfahren nach Anspruch 1, wobei das Alkalimetallhalogenid Kalium- oder Natriumiodid ist und/oder das Kupferhalogenid Kupferiodid ist.

3. Verfahren nach Anspruch 2, wobei das thermische Stabilisierungsmittel eine Mischung aus Kaliumiodid und Kupferiodid ist.

4. Verfahren nach einem der Ansprüche 1 bis 3, wobei das Verhältnis zwischen der Anzahl der Mole Halogenid und der Anzahl der Mole Kupfer größer oder gleich 7 : 1 ist.

5. Verfahren nach Anspruch 3, wobei das Kupferiodid in einer Menge von weniger als oder gleich 6 Gew.% in einer wässrigen Kaliumiodid-Lösung mit 50 Gew.% vorhanden ist.

6. Verfahren nach einem der Ansprüche 1 bis 5, wobei ein Schritt des Spülens mit Wasser nach dem Inkontaktbringen des Granulats mit der einzigen wässrigen Lösung, die mindestens ein thermisches Stabilisierungsmittel umfasst, durchgeführt wird.

7. Verfahren nach einem der Ansprüche 1 bis 6, wobei die Menge an wässriger Lösung, bezogen auf das Polyamid, zwischen 0,15 und 1 Gew.% beträgt.

8. Verfahren nach einem der Ansprüche 1 bis 7, wobei das Polyamid Polyamid 66 ist.

9. Verfahren nach einem der Ansprüche 1 bis 8, wobei das Inkontaktbringen des Polyamidgranulats mit der wässrigen Lösung, die mindestens ein thermisches Stabilisierungsmittel umfasst, durch Sprühen der wässrigen Lösung, die mindestens ein thermisches Stabilisierungsmittel umfasst, durchgeführt wird.

10. Verfahren nach einem der Ansprüche 1 bis 9, wobei das Polyamidgranulat, das nach dem Inkontaktbringen des Granulats mit der einzigen wässrigen Lösung, die mindestens ein thermisches Stabilisierungsmittel umfasst, erhalten wird, direkt einem Schritt der Nachkondensation in fester Phase unterworfen wird.

11. Verfahren zur Herstellung von Industriegarnen, wobei Polyamidgranulat nach dem Verfahren von einem der Ansprüche 1 bis 10 hergestellt wird und dieses Granulat verwendet wird, um Industriegarne herzustellen.

12. Verfahren nach Anspruch 11, wobei die Industriegarne durch Spinnen des Granulats, das aus dem Verfahren nach einem der Ansprüche 1 bis 10 stammt, erhalten wird.

13. Verfahren zur Herstellung von gewebten Artikeln, wobei die Industriegarne durch das Verfahren von Anspruch 11 oder 12 erhalten werden und die Artikel aus diesen Garnen erhalten werden.

14. Verfahren nach Anspruch 13, wobei die Artikel aufblasbare Airbags oder Reifencord sind.

## Claims

1. Process for preparing polyamide granules with heat resistance properties, by wet impregnation of the polyamide granules with a single aqueous solution comprising at least one heat stabilizer, **characterized in that** the polyamide granules are placed in contact with a single aqueous solution comprising at least one heat stabilizer, the total amount of aqueous solution relative to the polyamide being less than or equal to 1% by weight, and **in that** the heat stabilizer is a mixture of alkali metal or alkaline-earth metal halide and of copper halide, the total amount of aqueous solution relative to the polyamide being the sum of the amounts of aqueous solutions used, including the water originating from any rinsing step.

2. Process according to Claim 1, in which the alkali metal halide is potassium or sodium iodide, and/or the copper halide is copper iodide.

3. Process according to Claim 2, in which the heat stabilizer is a mixture of potassium iodide and copper iodide.

4. Process according to one of Claims 1 to 3, in which the ratio between the number of moles of halide and the number of moles of copper is greater than or equal to 7/ 1.

5. Process according to Claim 3, in which the copper iodide is present in an amount of less than or equal to 6% by weight in an aqueous solution of potassium iodide at 50% by weight.

6. Process according to one of Claims 1 to 5, in which a step of rinsing with water is performed after placing the granules in contact with the single aqueous solution comprising at least one heat stabilizer.

7. Process according to one of Claims 1 to 6, in which the amount of aqueous solution relative to the polyamide is between 0.15% and 1% by weight.

8. Process according to one of Claims 1 to 7, in which the polyamide is polyamide 66.

9. Process according to one of Claims 1 to 8, in which the placing in contact of the polyamide granules with the aqueous solution comprising at least one heat stabilizer is performed by spraying of the aqueous solution comprising at least one heat stabilizer.

10. Process according to one of Claims 1 to 9, in which the polyamide granules obtained after the placing in contact with at least the aqueous solution comprising at least one heat stabilizer are subjected directly to a solid-phase post-condensation step.

11. Process for manufacturing industrial yarns according to which polyamide granules are manufactured by the process of one of Claims 1 to 10 and these granules are used to manufacture industrial yarns.

12. Process according to Claim 11, in which the industrial yarns are obtained by spinning the granules derived from the process according to one of Claims 1 to 10.

13. Process for manufacturing woven articles according to which industrial yarns are obtained by the process of Claim 11 or 12, and the articles are obtained from these yarns.

14. Process according to Claim 13, in which the articles are airbags or tire cords.
